# EUROPEAN PATENT APPLICATION

(11) **EP 4 413 877 A1**
(43) Date of publication of application: **14.08.2024**
(21) Application number: 21959960.2
(22) Date of filing: 08.10.2021
(51) Int. Cl.: A24F 40/40

(54) **FLAVOR INHALER AND METHOD FOR MANUFACTURING FLAVOR INHALER**

(71) Applicant: JAPAN TOBACCO INC., Minato-ku Tokyo 105-6927 (JP)
(72) Inventor: INOUE, Yasunobu, Tokyo 130-8603 (JP); KOMINAMI, Takashi, Tokyo 130-8603 (JP); MORITA, Keisuke, Tokyo 130-8603 (JP); FUJINAGA, Ikuo, Tokyo 130-8603 (JP); YAMADA, Manabu, Tokyo 130-8603 (JP)
(74) Representative: Hoffmann Eitle
(86) International application number: PCT/JP2021/037321
(87) International publication number: WO 2023/058218

(57) **Abstract**

This flavor inhaler has a chamber that accommodates a smokable product, a heater for heating the smokable product accommodated in the chamber, and an insulation member that suppresses the dissipation of heat to the smokable product or outside the heater device. The insulation member has a first surface, a second surface on the reverse side of the first surface, and an end face that connects the first surface and the second surface and has an area smaller than that of the first surface or the second surface. The insulation member has a porous structure and at least the end face is sealed.

## Description

### TECHNICAL FIELD

The present invention relates to a flavor inhaler and a method for manufacturing a flavor inhaler.

### BACKGROUND ART

To date, a flavor inhaler for inhaling flavor or the like without burning a material is known. The flavor inhaler includes, for example, a chamber that accommodates a flavor generating article and a heater that heats the flavor generating article accommodated in the chamber (see, for example, PTL 1).

### CITATION LIST

### PATENT LITERATURE

PTL 1: International Publication No. 2020/084775

### SUMMARY OF INVENTION

### TECHNICAL PROBLEM

As disclosed in PTL 1, a heat-insulating member having a porous structure may be used in a flavor inhaler in order to improve the efficiency of a heater in heating a flavor generating article. On the other hand, such a heat-insulating member has a characteristic of easily absorbing moisture due to the porous structure. If the heater starts heating the flavor generating article in a state in which the heat-insulating member has absorbed moisture, energy required to evaporate the moisture is additionally consumed. Therefore, with a flavor inhaler having such a heat-insulating member, the energy efficiency in generation of aerosol may decrease, and it may take a longer preheating time to reach a state in which sufficient aerosol is generated.

An object of the present invention is to suppress absorption of moisture by a heat-insulating member of a flavor inhaler.

### SOLUTION TO PROBLEM

According to a first aspect, a flavor inhaler is provided. The flavor inhaler includes: a chamber that accommodates a smokable article; a heater for heating the smokable article accommodated in the chamber; and a heat-insulating member that suppresses dissipation of heat of the smokable article or the heater to an outside of a device. The heat-insulating member has a first surface, a second surface opposite to the first surface, and an end surface that connects the first surface and the second surface and that has a smaller area than the first surface or the second surface. The heat-insulating member has a porous structure, and at least the end surface is sealed.

With the first aspect, since the end surface of the heat-insulating member is sealed, it is possible to suppress absorption of moisture by the heat-insulating member, that is, entry of moisture to the inside of the heat-insulating member having a porous structure. Therefore, it is possible to suppress the energy of the heater from being used to heat moisture included in the heat-insulating member, and, as a result, to suppress decrease of energy efficiency. Moreover, since the material surface is directly sealed without accommodating the heat-insulating member in a case or the like, it is possible to suppress increase in the size of a unit including the heat-insulating member.

According to a second aspect, in the first aspect, the first surface or the second surface of the heat-insulating member is sealed with a support member.

Since the heat-insulating member generally has low rigidity and is fragile, the heat-insulating member may be supported by a support member. The support member may be made of, for example, a resin film, a heat-shrinkable tube, a resin such as PEEK or the like, a metal such as stainless steel or the like, paper, glass, or the like. With the second aspect, since the first surface or the second surface of the heat-insulating member is sealed with the support member, it is possible to further suppress entry of moisture to the inside of the heat-insulating member having a porous structure. Therefore, it is possible to further suppress the energy of the heater from being used to heat moisture included in the heat-insulating member, and, as a result, to further suppress decrease of energy efficiency.

According to a third aspect, in the first or second aspect, an entire surface of the heat-insulating member is sealed.

With the third aspect, it is possible to further suppress entry of moisture to the inside of the insulator having a porous structure. Therefore, it is possible to further suppress the energy of the heater from being used to heat moisture included in the heat-insulating member, and, as a result, to further suppress decrease of energy efficiency.

According to a fourth aspect, in any one of the first to third aspects, an internal space of the porous structure is in a decompressed state at normal temperature.

With the fourth aspect, since the internal space of the heat-insulating member having a porous structure is in a decompressed state, the amount of water vapor included in the porous structure is comparatively small. Therefore, it is possible to further suppress the energy of the heater from being used to heat moisture (water vapor) included in the heat-insulating member, and, as a result, to further suppress decrease of energy efficiency.

According to a fifth aspect, in any one of the first to fourth aspects, the end surface is sealed with a heat-resistant resin.

With the fifth aspect, since it is possible to maintain the physical properties of the heat-resistant resin even when the heat-insulating member is exposed to a predetermined high temperature, sealing of the end surface can be maintained when the heat-insulating member is heated by the heater. It is preferable that the heat-resistant resin have heat resistance such that the heat-resistant resin can maintain physical properties thereof at temperatures of, for example, 100°C or higher.

According to a sixth aspect, in the fifth aspect, the porous structure is impregnated with the heat-resistant resin from the end surface.

With the sixth aspect, since the porous structure of the end surface is impregnated with the heat-resistant resin, it is possible to more reliably seal the end surface with the heat-resistant resin. Thus, it is possible to further suppress entry of moisture to the inside of the insulator having a porous structure.

According to a seventh aspect, in the fifth or sixth aspect, the heat-resistant resin is a thermosetting adhesive.

With the seventh aspect, since the inside of the porous structure of the heat-insulating member can be degassed by heat when the heat-resistant resin is being hardened by heat, it is possible to seal the end surface in a state in which the amount of water vapor in the porous structure has been reduced. Therefore, it is possible to further suppress the energy of the heater from being used to heat moisture (water vapor) included in the heat-insulating member, and, as a result, to further suppress decrease of energy efficiency.

According to an eighth aspect, in the seventh aspect, the adhesive, before being hardened by heat, has a property such that a viscosity thereof decreases when heated.

With the eighth aspect, when the adhesive is heated, it becomes easy to apply the adhesive to the end surface of the heat-insulating member. Moreover, since the viscosity of the adhesive decreases, it becomes easy to impregnate the porous structure of the heat-insulating member with the adhesive. Furthermore, it becomes easy to degas the internal space of the porous structure of the heat-insulating member. Accordingly, with the eighth aspect, it is possible to more reliably seal the end surface with the heat-resistant resin, while maintaining the internal space of the porous structure of the heat-insulating member in a decompressed state. Thus, it is possible to further suppress entry of moisture to the inside of the heat-insulating member having a porous structure, and it is possible to further suppress the energy of the heater from being used to heat moisture (water vapor) included in the heat-insulating member and, as a result, to further suppress decrease of energy efficiency.

According to a ninth aspect, in any one of the first to eighth aspects, the porous structure is a continuous pore structure.

With the ninth aspect, since a plurality of pores of the porous structure communicate with each other, the entirety of the porous structure can be degassed, for example, by sealing the end surface of the heat-insulating member in a state in which the heat-insulating member has been heated and degassed. Therefore, it is possible to further suppress the energy of the heater from being used to heat moisture (water vapor) included in the heat-insulating member, and, as a result, to further suppress decrease of energy efficiency.

According to a tenth aspect, in any one of the first to ninth aspects, the heat-insulating member includes an aerogel.

With the tenth aspect, since the heat-insulating member has a comparatively high heat insulation performance, it is possible to further suppress dissipation of heat of the smokable article or the heater to the outside of the device, and it is possible to efficiently heat the smokable article.

According to an eleventh aspect, in any one of the first to tenth aspects, the heat-insulating member includes a radiation-suppressing agent.

As the temperature at which the smokable article is heated increases, contribution of heat transfer by heat radiation increases. With the eleventh aspect, since the heat-insulating member can suppress heat transfer by heat radiation, it is possible to more efficiently heat the smokable article.

According to a twelfth aspect, in any one of the first to eleventh aspects, the heat-insulating member is a heat-insulating sheet that surrounds the chamber.

With the twelfth aspect, since transfer of heat from around the chamber to the outside of the device is suppressed, it is possible to more efficiently heat the smokable article disposed in the chamber.

According to a thirteenth aspect, in any one of the first to twelfth aspects, the heater is configured to heat the smokable article to 200°C or higher and 400°C or lower.

With the thirteenth aspect, it is possible to generate an aerosol by appropriately heating the smokable article while suppressing an effect on the heat-insulating member. If the smokable article is heated to lower than 200°C, a sufficient amount of aerosol may not be generated from the smokable article. If the smokable article is heated to higher than 400°C, the heat-insulating member may be negatively affected, depending on the type of the heat-insulating member and the distance between the heater and the heat-insulating member.

According to a fourteenth aspect, in any one of the first to thirteenth aspects, the heater is disposed on an outer circumference of the chamber.

With the fourteenth aspect, since the smokable article is heated by the heater from the outer circumferential side, it becomes easy for the heat of the heater to be transferred to the outer circumferential side. Therefore, as the heat-insulating member suppresses dissipation of heat to the outside of the device, it is possible to maintain heat of the heater further inside of the chamber, that is, on the smokable article side, and it is possible to more efficiently heat the smokable article. Moreover, since the heater is disposed on the outer circumference of the chamber, direct contact of the heater with the smokable article is avoided, and thus soiling of the heater with the smokable article is suppressed.

According to a fifteenth aspect, in any one of the first to fourteenth aspects, the end surface is positioned at an end portion in an insertion direction of the smokable article into the chamber.

According to a sixteenth aspect, a method for manufacturing a flavor inhaler including a heater for heating a smokable article and a heat-insulating member having a porous structure that suppresses dissipation of heat of the smokable article or the heater to an outside of a device is provided. The method for manufacturing the flavor inhaler includes: an application step of applying a thermosetting adhesive to an end surface of the heat-insulating member; a first heating step of heating the heat-insulating member, to which the adhesive has been applied, at a first temperature; a second heating step of heating the heat-insulating member, which has been heated in the first heating step, at a second temperature that is higher than the first temperature to harden the adhesive; and a step of sealing the end surface by performing the second heating step.

With the sixteenth aspect, since it is possible to degas the inside of the porous structure of the heat-insulating member before hardening the thermosetting adhesive in the first heating step, it is possible to reduce the amount of water vapor in the porous structure. Moreover, in the second heating step, it is possible to seal the end surface with the thermosetting adhesive in a state in which the amount of water vapor in the porous structure has been reduced. Furthermore, it is possible to suppress absorption of moisture by the heat-insulating member from the end surface of the heat-insulating member, that is, entry of moisture to the inside of the heat-insulating member having a porous structure. Therefore, it is possible to suppress the energy of the heater from being used to heat moisture included in the heat-insulating member, and, as a result, to suppress decrease of energy efficiency.

According to a seventeenth, in the sixteenth aspect, the first heating step includes a step of inflating air included in the heat-insulating member having a porous structure.

With the seventeenth aspect, since the end surface of the heat-insulating member is sealed after air included in the heat-insulating member has been inflated, the internal space of the heat-insulating member can enter a decompressed state at normal temperature. That is, since the internal space of the porous structure of the heat-insulating member at normal temperature can be in a decompressed state, the amount of water vapor included in the porous structure is comparatively small. Therefore, it is possible to further suppress the energy of the heater from being used to heat moisture (water vapor) included in the heat-insulating member, and, as a result, to further suppress decrease of energy efficiency.

According to an eighteenth aspect, in the sixteenth or seventeenth aspect, the first heating step includes a step of decreasing a viscosity of the adhesive that has been applied to the heat-insulating member.

With the eighteenth aspect, since it is possible to make it easier to apply the adhesive to the end surface of the heat-insulating member and to impregnate the porous structure of the heat-insulating member with the adhesive, it is possible to more reliably seal the end surface. Accordingly, it is possible to further suppress entry of moisture to the inside of the insulator having a porous structure.

According to a nineteenth aspect, the method according to any one of the sixteenth to eighteenth aspects includes, before the application step, a step of sealing a first surface of the heat-insulating member or a second surface of the heat-insulating member opposite to the first surface.

With the nineteenth aspect, since the first surface or the second surface of the heat-insulating member is sealed, it is possible to further suppress entry of moisture to the inside of the insulator having a porous structure. Therefore, it is possible to further suppress the energy of the heater from being used to heat moisture included in the heat-insulating member, and, as a result, to further suppress decrease of energy efficiency.

According to a twentieth aspect, the method according to any one of the sixteenth to nineteenth aspects includes a step of sealing an entire surface of the heat-insulating member.

With the twentieth aspect, it is possible to further suppress entry of moisture to the inside of the insulator having a porous structure. Therefore, it is possible to further suppress the energy of the heater from being used to heat moisture included in the heat-insulating member, and, as a result, to further suppress decrease of energy efficiency.

### BRIEF DESCRIPTION OF DRAWINGS

[Fig. 1A] Fig. 1A is a schematic front view of a flavor inhaler according to the present embodiment.
[Fig. 1B] Fig. 1B is a schematic top view of the flavor inhaler according to the present embodiment.
[Fig. 1C] Fig. 1C is a schematic bottom view of the flavor inhaler according to the present embodiment.
[Fig. 2] Fig. 2 is a schematic side sectional view of a consumable article.
[Fig. 3] Fig. 3 is a sectional view of the flavor inhaler taken along line 3-3 in Fig. 1B.
[Fig. 4] Fig. 4 is a perspective view of a heat-insulating member of a heat insulator.
[Fig. 5] Fig. 5 is a perspective view of a heat insulator disposed around a chamber.
[Fig. 6] Fig. 6 is a flowchart illustrating the manufacturing flow of an atomizer.

### DESCRIPTION OF EMBODIMENTS

Hereafter, embodiments of the present invention will be described with reference to the drawings. In the drawings described below, the same or corresponding structural elements will be denoted by the same numerals and redundant descriptions thereof will be omitted.

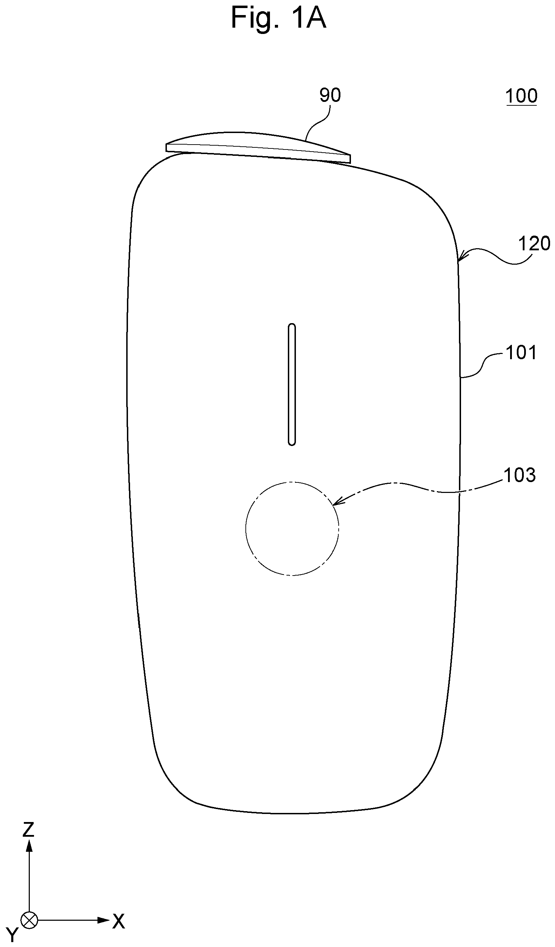

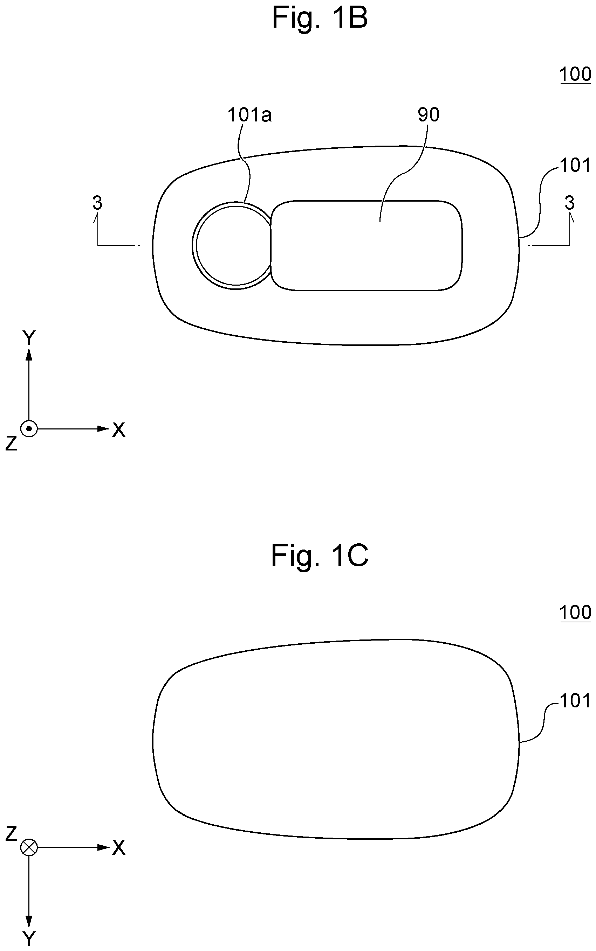

Fig. 1A is a schematic front view of a flavor inhaler 100 according to the present embodiment. Fig. 1B is a schematic top view of the flavor inhaler 100 according to the present embodiment. Fig. 1C is a schematic bottom view of the flavor inhaler 100 according to the present embodiment. For convenience of description, an X-Y-Z orthogonal coordinate system may be added to the figures described in the present description. In the coordinate system, the Z axis is oriented vertically upward, the X-Y plane is disposed so as to cut the flavor inhaler 100 in the horizontal direction, and the Y axis is disposed so as to extend from the front side to the back side of the flavor inhaler 100. The Z axis can be said to be an insertion direction of a consumable article accommodated in a chamber 50 of an atomizer 30 described below, or the axial direction of the chamber 50. The X-axis direction can be said to be a device longitudinal direction in a plane perpendicular to the insertion direction of the consumable article or a direction in which a heater and a power supply are arranged. The Y-axis direction can be said to be a device transversal direction in the plane perpendicular to the insertion direction of the consumable article. A direction parallel to the X-Y plane is a direction perpendicular to the axial direction of the chamber 50, and can be said to be a radial direction. In the present description, a circumferential direction refers to a circumferential direction around the insertion direction of the consumable article or the axial direction of the chamber 50.

The flavor inhaler 100 according to the present embodiment is configured to generate an aerosol including a flavor by heating, for example, a stick-type consumable article having a smokable article including a flavor source and an aerosol source.

As illustrated in Figs. 1A to 1C, the flavor inhaler 100 may be constituted by a slide cover 90 and a body 120. The body 120 has an outer housing 101 and a switch portion 103. The outer housing 101 constitutes the outermost housing of the flavor inhaler 100, and has a size that fits a hand of a user. When using the flavor inhaler 100, a user can hold the body 120 by hand and inhale the aerosol. The outer housing 101 may be configured by assembling a plurality of members.

As illustrated in Fig. 1B, the outer housing 101 has an opening 101a into which a consumable article is inserted.

The slide cover 90 is slidably attached to the outer housing 101 so as to close the opening 101a. To be specific, the slide cover 90 is movable along an outer surface of the outer housing 101 between a closed position for closing the opening 101a (the position illustrated in Fig. 1A) and an open position for opening the opening 101a (the position illustrated in Fig. 1B). For example, a user can move the slide cover 90 to the closed position and the open position by manually operating the slide cover 90. Thus, the slide cover 90 can permit or limit access of the consumable article to the inside of the flavor inhaler 100.

The switch portion 103 is used to switch between on and off of the operation of the flavor inhaler 100. For example, when a user operates the switch portion 103 in a state in which the consumable article has been inserted into the flavor inhaler 100, electric power is supplied from a power supply (not shown) to a heater (not shown), and it is possible to heat the consumable article without burning the consumable article. The switch portion 103 may have a switch provided outside of the outer housing 101, or may have a switch positioned inside of the outer housing 101. In a case where the switch is positioned inside of the outer housing 101, when the switch portion 103 on a surface of the outer housing 101 is pressed, the switch is pressed indirectly. In the present embodiment, an example in which the switch of the switch portion 103 is positioned inside of the outer housing 101 will be described.

The flavor inhaler 100 may further have a terminal (not shown). The terminal may be an interface that connects the flavor inhaler 100 with, for example, an external power supply. When a power supply included in the flavor inhaler 100 is a rechargeable battery, it is possible to charge the power supply by connecting an external power supply to the terminal to allow an electric current to flow from the external power supply to the power supply. The flavor inhaler 100 may be configured to be capable of transmitting data related to the operation of the flavor inhaler 100 by connecting a data transmission cable to the terminal.

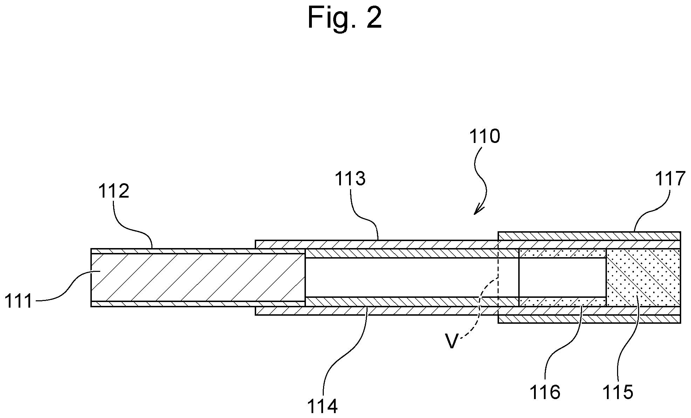

Next, a consumable article used in the flavor inhaler 100 according to the present embodiment will be described. Fig. 2 is a schematic side sectional view of a consumable article 110. In the present embodiment, a smoking system may be constituted by the flavor inhaler 100 and the consumable article 110. In the example illustrated in Fig. 2, the consumable article 110 includes a smokable article 111, a tubular member 114, a hollow filter portion 116, and a filter portion 115. The smokable article 111 is wrapped by first wrapping paper 112. The tubular member 114, the hollow filter portion 116, and the filter portion 115 are wrapped by second wrapping paper 113 that is different from the first wrapping paper 112. The second wrapping paper 113 also wraps a part of the first wrapping paper 112 that wraps the smokable article 111. Thus, the tubular member 114, the hollow filter portion 116, the filter portion 115, and the smokable article 111 are coupled. However, the second wrapping paper 113 may be omitted; and the tubular member 114, the hollow filter portion 116, the filter portion 115, and the smokable article 111 may be coupled by using the first wrapping paper 112. A perforation V may be formed in the tubular member 114 and the second wrapping paper 113 covering the tubular member 114. The perforation V is usually a hole for promoting flow of air from the outside due to inhalation by a user, and the flow of air can lower the temperatures of components and air that flows from the smokable article 111. A lip release agent 117, for allowing a lip of a user to be easily separated from the second wrapping paper 113, is applied to an outer surface of the second wrapping paper 113 in the vicinity of an end portion on the filter portion 115 side. A portion of the consumable article 110 to which the lip release agent 117 is applied functions as an inhalation port of the consumable article 110.

The smokable article 111 may include, for example, a flavor source such as tobacco and an aerosol source. The first wrapping paper 112, which wraps the smokable article 111, may be a sheet member having air-permeability. The tubular member 114 may be a paper tube or a hollow filter. In the example illustrated in the figure, the consumable article 110 includes the smokable article 111, the tubular member 114, the hollow filter portion 116, and the filter portion 115, but the configuration of the consumable article 110 is not limited to this. For example, the hollow filter portion 116 may be omitted, and the tubular member 114 and the filter portion 115 may be disposed adjacent to each other.

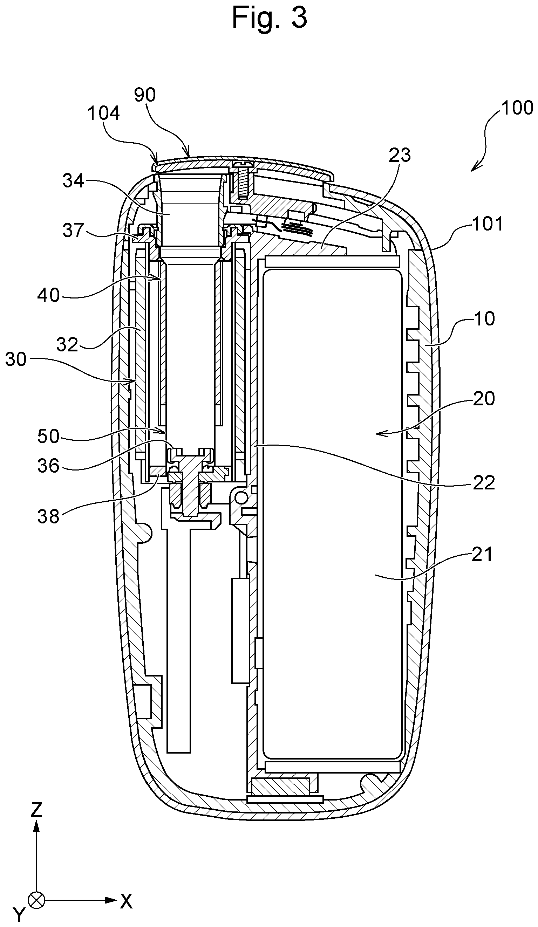

Next, the internal structure of the flavor inhaler 100 will be described. Fig. 3 is a sectional view of the flavor inhaler 100 taken along line 3-3 of Fig. 1B. In Fig. 3, the slide cover 90 is in the closed position. As illustrated in Fig. 3, an inner housing 10 is accommodated inside of the outer housing 101 of the flavor inhaler 100. The inner housing 10 may be made of, for example, a resin, and in particular, may be made of polycarbonate (PC), ABS (Acrylonitrile-Butadiene-Styrene) resin, PEEK (polyetheretherketone), a polymer alloy containing a plurality of types of polymers, or a metal such as aluminum. From the viewpoint of heat resistance and strength, it is preferable that the inner housing 10 be made of PEEK. However, the material of the inner housing 10 is not particularly limited. A power supply unit 20 and the atomizer 30 are provided in the internal space of the inner housing 10. The outer housing 101 may be made of, for example, a resin, and in particular, may be made of polycarbonate (PC), ABS (Acrylonitrile-Butadiene-Styrene) resin, PEEK (polyetheretherketone), a polymer alloy containing a plurality of types of polymers, or a metal such as aluminum.

The power supply unit 20 has a power supply 21. The power supply 21 may be, for example, a rechargeable battery or a non-rechargeable battery. The power supply 21 is electrically connected to the atomizer 30 via a PCB (Printed Circuit board) or the like (not shown). Thus, the power supply 21 can supply electric power to the atomizer 30 so that the consumable article 110 is heated appropriately.

As illustrated in the figure, the atomizer 30 includes the chamber 50 that extends in the insertion direction of the consumable article 110 (the Z-axis direction), a heater 40 that surrounds a part of the chamber 50, a heat insulator 32, and an insertion guide member 34 having a substantially tubular shape. The chamber 50 is configured to accommodate the smokable article 111 of the consumable article 110. It is preferable that the chamber 50 be made of a material that has heat resistance and whose thermal expansion coefficient is small. For example, the chamber 50 may be made of a metal such as stainless steel or the like, a resin such as PEEK or the like, glass, ceramics, or the like. As illustrated in the figure, a bottom member 36 may be provided at the bottom of the chamber 50. The bottom member 36 may function as a stopper that positions the consumable article 110 inserted into the chamber 50. The bottom member 36 has recesses and protrusions at a surface that the consumable article 110 contacts, and may define a space that can supply air to the surface that the consumable article 110 contacts. The material of the bottom member 36 may be, for example, a resin material such as PEEK or the like, a metal, glass, ceramic, or the like, but is not particularly limited to any of these. The material of the bottom member 36 may be a material whose heat conductivity is lower than that of the material of the chamber 50. When the bottom member 36 is to be joined to the bottom portion of the chamber 50, it is possible to use an adhesive that may be made of a resin material such as epoxy resin or the like or an inorganic material.

The heater 40 includes a sheet-shaped heater for heating the smokable article 111 of the consumable article 110 accommodated in the chamber 50. The heater 40 is disposed so as to surround the smokable article 111 of the consumable article 110. In the present embodiment, the heater 40 may be disposed so as to surround the chamber 50. To be specific, the heater 40 is configured to be in contact with the outer circumferential surface of the chamber 50 and to heat the consumable article 110 accommodated in the chamber 50. The heater 40 may further include a heat-insulating member positioned outside of the heater 40, a shrinkable tube that fixes the heater 40 to the chamber 50, and the like.

The heater 40 is configured to heat the smokable article 111 of the consumable article 110 accommodated in the chamber 50 from the outside. The heater 40 may be provided on an outer surface of a side wall of the chamber 50 or may be provided on an inner surface of the side wall. In the present embodiment, the heater 40 may be disposed on the outer circumference of the chamber 50. To be specific, the heater 40 may surround the chamber 50 so as to be in contact with the outer circumferential surface of the chamber 50. In this case, since the smokable article 111 is heated by the heater 40 from the outer circumferential side, it become easy for the heat of the heater 40 to be transferred to the outer circumferential side. Therefore, as the heat insulator 32 suppresses dissipation of heat to the outside of the device, it is possible to maintain heat of the heater 40 further inside of the chamber 50, that is, on the smokable article 111 side, and it is possible to more efficiently heat the smokable article 111 disposed in the chamber 50. Moreover, since the heater 40 is disposed on the outer circumference of the chamber 50, direct contact of the heater 40 with the smokable article 111 is avoided, and thus soiling of the heater 40 with the smokable article 111 is suppressed.

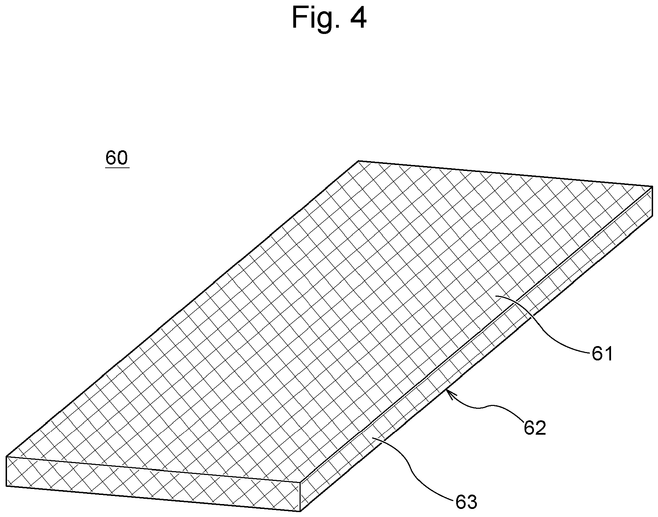

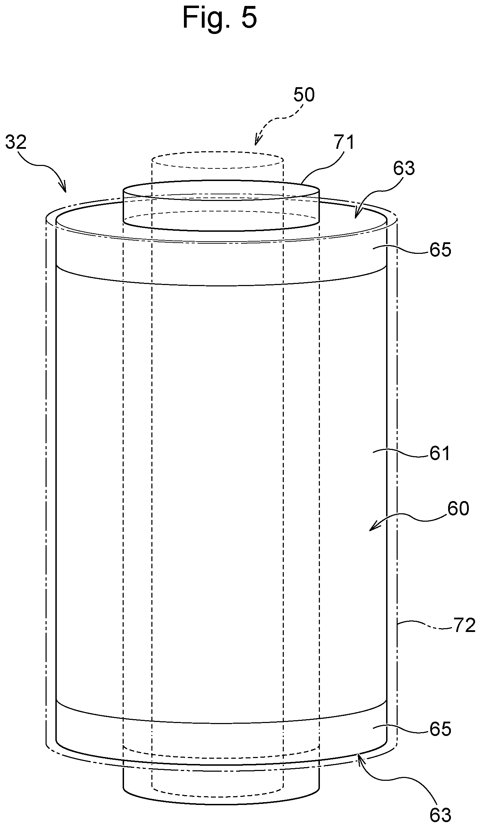

It is preferable that the heater 40 heat the smokable article 111 to 200°C or higher and 400°C or lower. Thus, it is possible to generate an aerosol by appropriately heating the smokable article 111 while suppressing an effect on a heat-insulating member 60 described below (see Figs. 4 and 5). If the smokable article 111 is heated to lower than 200°C, a sufficient amount of aerosol may not be generated from the smokable article 111. If the smokable article 111 is heated to higher than 400°C, the heat-insulating member 60 may be negatively affected, depending on the type of the heat-insulating member 60 described below and the distance between the heater 40 and the heat-insulating member 60.

The heat insulator 32 is configured to suppress dissipation of heat of the smokable article 111 or the heater 40 to the outside of the device. The heat insulator 32 is substantially tubular as a whole, and is disposed so as to surround the chamber 50 and the heater 40. The heat insulator 32 may include, for example, an aerogel. The heat insulator 32 is disposed so as to be separated from the chamber 50 and the heater 40, and an air layer is formed between the heat insulator 32, and the chamber 50 and the heater 40. The insertion guide member 34 is made of, for example, a resin material such as PEEK, PC, ABS, or the like, and is provided between the slide cover 90 in the closed position and the chamber 50. The flavor inhaler 100 has a first holder 37 and a second holder 38 for holding the heat insulator 32. The first holder 37 and the second holder 38 may be made of, for example, an elastomer such as silicone rubber or the like. As illustrated in Fig. 3, the first holder 37 holds an end portion of the heat insulator 32 in the positive Z-axis direction. The second holder 38 holds an end portion of the heat insulator 32 in the negative Z-axis direction.

The insertion guide member 34 has a function of guiding insertion of the consumable article 110. To be specific, when the slide cover 90 is in the open position, the insertion guide member 34 communicates with the opening 101a of the flavor inhaler 100 illustrated in Fig. 1B, and guides the consumable article 110 to the chamber 50 as the consumable article 110 is being inserted into the insertion guide member 34. That is, an end portion of the flavor inhaler 100 on a side on which the opening 101a is formed constitutes an insertion-side end portion 104 into which the consumable article 110 including the smokable article 111 is inserted. In the present embodiment, since the insertion guide member 34 may contact the chamber 50, it is preferable that the insertion guide member 34 be made of PEEK from the viewpoint of heat resistance.

The flavor inhaler 100 has a first chassis 22, which extends in the Z-axis direction between the power supply 21 and the atomizer 30, and a second chassis 23, which extends so as to cover the slide cover 90 side of the power supply 21. The first chassis 22 and the second chassis 23 are configured to partition a space in which the power supply 21 is accommodated in the inner housing 10.

Next, the heat insulator 32 will be described in detail. Fig. 4 is a perspective view of a heat-insulating member of the heat insulator 32. The heat-insulating member 60 is configured to suppress dissipation of heat of the heater 40 or the smokable article 111 accommodated in the chamber 50 to the outside of the device. As illustrated in Fig. 4, the heat-insulating member 60 has a first surface 61, a second surface 62, and an end surface 63. The second surface 62 is a surface opposite to the first surface 61. The end surface 63 is a surface that connects the first surface 61 and the second surface 62 and that has a smaller area than the first surface 61 or the second surface 62. In other words, the first surface 61 or the second surface 62 is a main surface of the heat-insulating member 60 having the largest area. As illustrated in Fig. 4, the heat-insulating member 60 may have a sheet-like shape as a whole.

The heat-insulating member 60 according to the present embodiment has a porous structure. The heat-insulating member 60 may be, for example, a material having hollow spaces therein, such as nonwoven fabric or foam, and, to be specific, may be glass fiber nonwoven fabric, foam of a heat-resistant resin such as melamine, PI (polyimide), or the like. It is preferable that the heat-insulating member 60 include an aerogel. In this case, since the heat-insulating member 60 has a comparatively high heat insulation performance, it is possible to further suppress dissipation of heat of the smokable article 111 or the heater 40 to the outside of the device, and it is possible to efficiently heat the smokable article 111. The aerogel may include, for example, a porous structure made of fumed silica, a silica aerogel, a carbon aerogel, or the like. The aerogel may be supported by the heat-insulating member 60 having a porous structure.

It is preferable that the heat-insulating member 60 include a radiation-suppressing agent. As the temperature at which the smokable article 111 is heated increases, contribution of heat transfer by heat radiation increases. When the heat-insulating member 60 includes a radiation-suppressing agent, since the heat-insulating member 60 can further suppress heat transfer by heat radiation, it is possible to more efficiently heat the smokable article 111. To be specific, the radiation suppression agent may include, for example, a silicon material such as SiC or the like, a metal oxide such as TiOz or the like, or a carbon material such as a hydrophobically-treated carbon or the like.

Fig. 5 is a perspective view of the heat insulator 32 disposed around the chamber 50. As illustrated in Fig. 5, it is preferable that the heat-insulating member 60 be a heat-insulating sheet that surrounds the chamber 50. Thus, since transfer of heat from around the chamber 50 to the outside of the device is suppressed, it is possible to more efficiently heat the smokable article 111 disposed in the chamber 50. In the example illustrated in Fig. 5, the heat-insulating member 60 has a substantially tubular shape so that the second surface 62 faces the chamber 50 side, and is disposed so as to surround the chamber 50. That is, in the example illustrated in Fig. 5, the first surface 61 of the heat-insulating member 60 having a tubular shape constitutes an outer circumferential surface.

As described above, when the heat-insulating member 60 has a porous structure, the heat-insulating member 60 can easily absorb moisture. So, in the present embodiment, at least the end surface 63 of the heat-insulating member 60 is sealed as illustrated in Fig. 5. Since the end surface 63 of the heat-insulating member 60 is sealed, it is possible to suppress absorption of moisture by the heat-insulating member 60, that is, entry of moisture to the inside of the heat-insulating member 60 having a porous structure. Therefore, it is possible to suppress the energy of the heater 40 from being used to heat moisture included in the heat-insulating member 60, and, as a result, to suppress decrease of energy efficiency. Moreover, since the material surface is directly sealed without accommodating the heat-insulating member in a case or the like, it is possible to suppress increase in the size of a unit including the heat-insulating member.

It is preferable that the end surface 63 be sealed with a heat-resistant resin 65. Thus, since it is possible to maintain the physical properties of the heat-resistant resin 65 even when the heat-insulating member 60 is exposed to a predetermined high temperature, sealing of the end surface 63 can be maintained when the heat-insulating member 60 is heated by the heater 40. It is preferable that the heat-resistant resin 65 have heat resistance such that the heat-resistant resin 65 can maintain physical properties thereof at temperatures of, for example, 100°C or higher. The sealing member is not limited to the heat-resistant resin 65, and the end surface 65 may be sealed with a sealing member made of, for example, a metal or ceramics.

It is preferable that the porous structure be impregnated with the heat-resistant resin 65 from the end surface 63. As illustrated in Fig. 5, a predetermined region of an end portion the heat-insulating member 60 is impregnated with the heat-resistant resin 65 from the end surface 63. Thus, since it is possible to more reliably seal the end surface 63 with the heat-resistant resin 65, it is possible to further suppress entry of moisture to the inside of the heat-insulating member 60 having a porous structure.

It is preferable that the heat-resistant resin 65 be a thermosetting adhesive. Thus, since the inside of the porous structure of the heat-insulating member 60 is degassed by heat when the heat-resistant resin 65 is hardened by heat, it is possible to seal the end surface 63 in a state in which the amount of moisture in the porous structure has been reduced. Therefore, it is possible to further suppress the energy of the heater 40 from being used to heat moisture (water vapor) included in the heat-insulating member 60, and, as a result, to further suppress decrease of energy efficiency. Examples of the thermosetting adhesive include an epoxy-based adhesive. The heat-resistant resin 65 is not limited to a thermosetting adhesive. The heat-resistant resin 65 may be, for example, a UV-curable resin, an O-ring made of an elastic resin, or a combination of these.

It is preferable that the adhesive, before being hardened by heat, have a property such that a viscosity thereof decreases when heated. Thus, when the adhesive is heated, it becomes easy to apply the adhesive to the end surface 63 of the heat-insulating member 60. Moreover, since the viscosity of the adhesive decreases, it becomes easy to impregnate the porous structure of the heat-insulating member 60 with the adhesive. Furthermore, it becomes easy to degas the internal space of the porous structure of the heat-insulating member 60. Accordingly, it is possible to more reliably seal the end surface 63 with the heat-resistant resin 65, while maintaining the internal space of the porous structure of the heat-insulating member 60 in a decompressed state. Thus, it is possible to further suppress entry of moisture to the inside of the heat-insulating member 60 having a porous structure, and it is possible to further suppress the energy of the heater 40 from being used to heat moisture (water vapor) included in the heat-insulating member 60 and, as a result, to further suppress decrease of energy efficiency.

As illustrated in Fig. 5, the end surface 63 to be sealed is positioned at an end portion in the insertion direction of the smokable article 111 into the chamber 50. In other words, the end surface 63 of the heat-insulating member 60 in the axial direction of the heat-insulating member 60 having a tubular shape (that is, the end surface 63 extending in the circumferential direction) is sealed. In the example illustrated in the figure, both end surfaces 63 at both end portions of the heat-insulating member 60 in the axial direction are sealed. The end surface 63 of the heat-insulating member 60 in the circumferential direction, that is, the end surface 63 extending in the insertion direction may be sealed with a support member 72 described below.

It is preferable that the first surface 61 or the second surface 62 of the heat-insulating member 60 be sealed with a support member. Since the heat-insulating member 60 generally has low rigidity and is fragile, the heat-insulating member 60 may be supported by a support member. The support member may be made of, for example, a resin film, a heat-shrinkable tube, a resin such as PEEK or the like, a metal such as stainless steel or the like, paper, glass, or the like. Thus, since the first surface 61 or the second surface 62 of the heat-insulating member 60 is sealed with the support member, it is possible to further suppress entry of moisture to the inside of the heat-insulating member 60 having a porous structure. Therefore, it is possible to further suppress the energy of the heater 40 from being used to heat moisture included in the heat-insulating member 60, and, as a result, to further suppress decrease of energy efficiency.

To be specific, in the example illustrated in Fig. 5, the second surface 62, which constitutes an inner circumferential surface of the heat-insulating member 60, is sealed with a support member 71. The support member 71 is substantially tubular, and the second surface 62 of the heat-insulating member 60 may be sealed with an outer circumferential surface of the support member 71. The support member 71 is disposed so as to surround the chamber 50 while being separated from the chamber 50. The support member 71 may be made of, for example, a resin such as PEEK or the like, a metal such as stainless steel or the like, paper, glass, or the like, and may be held by the first holder 37 and the second holder 38 illustrated in Fig. 3.

In the example illustrated in Fig. 5, the first surface 61, which constitutes an outer circumferential surface of the heat-insulating member 60, is sealed with the support member 72. The support member 72 is substantially tubular, and the first surface 61 of the heat-insulating member 60 may be sealed with an inner circumferential surface of the support member 72. The support member 72 may be, for example, a heat-shrinkable tube or a resin film such as a PI film. The support member 72 may have a function of pressing the heat-insulating member 60 against the support member 71.

It is preferable that the entire surface of the heat-insulating member 60 be sealed. In the example illustrated in Fig. 5, the entire surface of the heat-insulating member 60 is sealed with the support member 71, the support member 72, and the heat-resistant resin 65. Thus, it is possible to further suppress entry of moisture to the inside of the heat-insulating member 60 having a porous structure. Therefore, it is possible to further suppress the energy of the heater 40 for heating the smokable article 111 from being used to heat moisture included in the heat-insulating member 60, and, as a result, to further suppress decrease of energy efficiency.

It is preferable that the internal space of the porous structure of the heat-insulating member 60 be in a decompressed state at normal temperature. In this case, since the internal space of the porous structure of the heat-insulating member 60 is in a decompressed state, the amount of water vapor included in the porous structure is comparatively small. Therefore, it is possible to further suppress the energy of the heater 40 from being used to heat moisture (water vapor) included in the heat-insulating member 60, and, as a result, to further suppress decrease of energy efficiency.

It is preferable that the porous structure of the heat-insulating member 60 be a continuous pore structure. In this case, since a plurality of pores of the porous structure communicate with each other, the entirety of the porous structure can be degassed, for example, by sealing the end surface 63 of the heat-insulating member 60 in a state in which the heat-insulating member 60 has been heated and degassed. Therefore, it is possible to further suppress the energy of the heater 40 from being used to heat moisture (water vapor) included in the heat-insulating member 60, and, as a result, to further suppress decrease of energy efficiency.

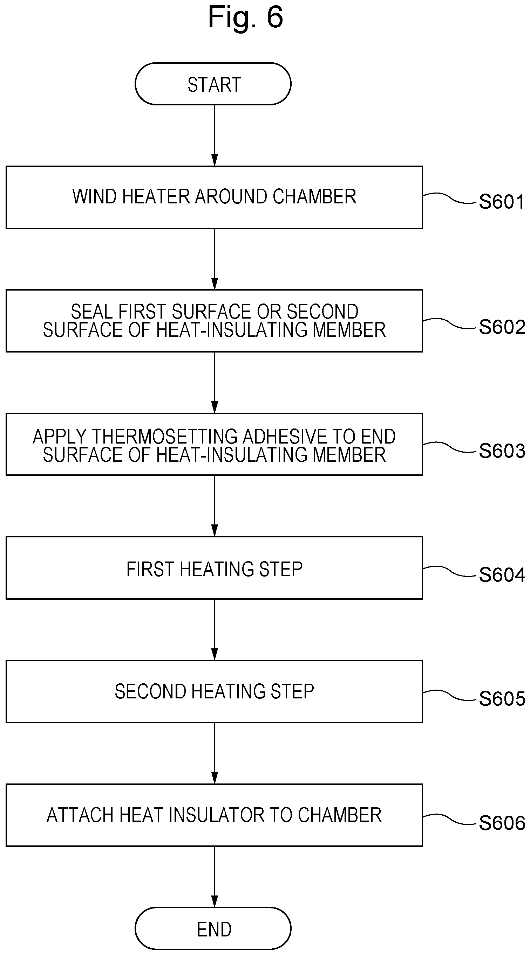

Next, a method for manufacturing the flavor inhaler 100 will be described. Fig. 6 is a flowchart illustrating the manufacturing flow of the flavor inhaler 100. As illustrated in Fig. 6, in the present embodiment, the heater 40 is wound around the outer circumference of the chamber 50 (step S601). However, this is not a limitation, and the heater 40 may have any form. Next, in the present embodiment, the first surface 61 and the second surface 62 of the heat-insulating member 60 are sealed (step S602). Thus, it is possible to further suppress entry of moisture to the inside of the heat-insulating member 60 having a porous structure. The order of performing step S601 and step S602 is arbitrary.

Next, a thermosetting adhesive is applied to the end surface 63 of the heat-insulating member 60 (step S603), and the heat-insulating member 60, to which the adhesive has been applied, is heated at a first temperature (a first heating step, step S604). Since it is possible to degas the inside of the porous structure of the heat-insulating member 60 by performing the first heating step, it is possible to reduce the amount of water vapor in the porous structure. It is preferable that the adhesive is not hardened by heat in the first heating step. It is preferable that the first heating step include inflating air included in the heat-insulating member 60 having a porous structure. Thus, since the end surface 63 of the heat-insulating member 60 is sealed after air included in the heat-insulating member 60 has been inflated, the internal space of the heat-insulating member 60 enters a decompressed state at normal temperature. That is, since the internal space of the porous structure of the heat-insulating member 60 at normal temperature is in a decompressed state, the amount of water vapor included in the porous structure is comparatively small. Therefore, it is possible to further suppress the energy of the heater 40 from being used to heat moisture (water vapor) included in the heat-insulating member 60, and, as a result, to further suppress decrease of energy efficiency. It is preferable that the first heating step include decreasing the viscosity of the adhesive that has been applied to the heat-insulating member 60. Thus, since it is possible to make it easier to apply the adhesive to the end surface 63 of the heat-insulating member 60 and to impregnate the porous structure of the heat-insulating member 60 with the adhesive, it is possible to more reliably seal the end surface 63.

Next, the heat-insulating member 60, which has been heated in the first heating step, is heated at a second temperature that is higher than the first temperature to harden the adhesive (a second heating step, step S605). Thus, in the second heating step, the end surface 63 is sealed with the thermosetting adhesive in a state in which the amount of water vapor in the porous structure has been reduced. As a result, it is possible to suppress absorption of moisture by the heat-insulating member 60 from the end surface 63 of the heat-insulating member 60, that is, entry of moisture to the inside of the heat-insulating member 60 having a porous structure. It is preferable that the entire surface of the heat-insulating member 60 be sealed through step S603 to step S605. Thus, it is possible to further suppress entry of moisture to the inside of the heat-insulating member 60 having a porous structure.

Lastly, the heat insulator 32 is attached to the chamber 50 via, for example, the first holder 37 and the second holder 38 (step S606). Thus, the atomizer 30 of the flavor inhaler 100 can be manufactured.

Heretofore, embodiments of the present invention have been described. However, the present invention is not limited to the embodiments described above, and can be modified in various ways within the scope of the technical ideas described in the claims, the description, and the drawings. Any shapes and materials that are not directly described in the description and the drawings are within the scope of the technical ideas of the present invention as long as the shapes and materials provide the operations and effects of the present invention.

### REFERENCE SIGNS LIST

- 30: atomizer
- 32: heat insulator
- 40: heater
- 50: chamber
- 60: heat-insulating member
- 61: first surface
- 62: second surface
- 63: end surface
- 65: heat-resistant resin
- 71: support member
- 72: support member
- 100: flavor inhaler
- 111: smokable article

## Claims

1. A flavor inhaler comprising:
a chamber that accommodates a smokable article;
a heater for heating the smokable article accommodated in the chamber; and
a heat-insulating member that suppresses dissipation of heat of the smokable article or the heater to an outside of a device,
wherein the heat-insulating member has a first surface, a second surface opposite to the first surface, and an end surface that connects the first surface and the second surface and that has a smaller area than the first surface or the second surface, and
wherein the heat-insulating member has a porous structure, and at least the end surface is sealed.

2. The flavor inhaler according to claim 1,
wherein the first surface or the second surface of the heat-insulating member is sealed with a support member.

3. The flavor inhaler according to claim 1 or 2,
wherein an entire surface of the heat-insulating member is sealed.

4. The flavor inhaler according to any one of claims 1 to 3,
wherein an internal space of the porous structure is in a decompressed state at normal temperature.

5. The flavor inhaler according to any one of claims 1 to 4,
wherein the end surface is sealed with a heat-resistant resin.

6. The flavor inhaler according to claim 5,
wherein the porous structure is impregnated with the heat-resistant resin from the end surface.

7. The flavor inhaler according to claim 5 or 6,
wherein the heat-resistant resin is a thermosetting adhesive.

8. The flavor inhaler according to claim 7,
wherein the adhesive, before being hardened by heat, has a property such that a viscosity thereof decreases when heated.

9. The flavor inhaler according to any one of claims 1 to 8,
wherein the porous structure is a continuous pore structure.

10. The flavor inhaler according to any one of claims 1 to 9,
wherein the heat-insulating member includes an aerogel.

11. The flavor inhaler according to any one of claims 1 to 10,
wherein the heat-insulating member includes a radiation-suppressing agent.

12. The flavor inhaler according to any one of claims 1 to 11,
wherein the heat-insulating member is a heat-insulating sheet that surrounds the chamber.

13. The flavor inhaler according to any one of claims 1 to 12,
wherein the heater is configured to heat the smokable article to 200°C or higher and 400°C or lower.

14. The flavor inhaler according to any one of claims 1 to 13,
wherein the heater is disposed on an outer circumference of the chamber.

15. The flavor inhaler according to any one of claims 1 to 14,
wherein the end surface is positioned at an end portion in an insertion direction of the smokable article into the chamber.

16. A method for manufacturing a flavor inhaler including a heater for heating a smokable article and a heat-insulating member having a porous structure that suppresses dissipation of heat of the smokable article or the heater to an outside of a device, the method comprising:
an application step of applying a thermosetting adhesive to an end surface of the heat-insulating member;
a first heating step of heating the heat-insulating member, to which the adhesive has been applied, at a first temperature;
a second heating step of heating the heat-insulating member, which has been heated in the first heating step, at a second temperature that is higher than the first temperature to harden the adhesive; and
a step of sealing the end surface by performing the second heating step.

17. The method for manufacturing a flavor inhaler according to claim 16,
wherein the first heating step includes a step of inflating air included in the heat-insulating member having a porous structure.

18. The method for manufacturing a flavor inhaler according to claim 16 or 17,
wherein the first heating step includes a step of decreasing a viscosity of the adhesive that has been applied to the heat-insulating member.

19. The method for manufacturing a flavor inhaler according to any one of claims 16 to 18, comprising:
before the application step, a step of sealing a first surface of the heat-insulating member or a second surface of the heat-insulating member opposite to the first surface.

20. The method for manufacturing a flavor inhaler according to any one of claims 16 to 19, comprising:
a step of sealing an entire surface of the heat-insulating member.
